# EUROPEAN PATENT SPECIFICATION

(11) **EP 2 203 878 B1**
(45) Date of publication and mention of the grant of the patent: **13.09.2017**
(21) Application number: 08873216.9
(22) Date of filing: 18.09.2008
(51) Int. Cl.: G06Q 10/00, G05B 19/409

(54) **INFORMATION PROCESSING APPARATUS AND METHOD FOR REMOTE TECHNICAL ASSISTANCE**
INFORMATIONSVERARBEITUNGSVORRICHTUNG UND -VERFAHREN FÜR TECHNISCHE FERNUNTERSTÜTZUNG
APPAREIL DE TRAITEMENT D'INFORMATIONS ET PROCÉDÉ D'ASSISTANCE TECHNIQUE À DISTANCE

(30) Priority: 18.09.2007 WO PCT/EP2007/008125
(43) Date of publication of application: 07.07.2010
(73) Proprietor: VRMEDIA S.r.l., 56127 Pisa (IT)
(72) Inventor: TECCHIA, Franco, I-54100 Massa (IT); BACCINELLI, Sandro, I-54100 Massa (IT); CARROZZINO, Marcello, I-58100 Grosseto (IT); BERGAMASCO, Massimo, I-56011 Calci (IT)
(74) Representative: Celestino, Marco
(86) International application number: PCT/EP2008/007879
(87) International publication number: WO 2009/112063

(56) References cited:
- WO-A-00/52541
- WO-A-02/067067
- WO-A-2007/066166
- WO-A-2009/036782
- US-A1- 2002 010 734
- US-A1- 2004 211 883
- US-A1- 2008 030 575
- JACOBS M C ET AL: "Managing latency in complex augmented reality systems" PROCEEDINGS OF 1997 SYMPOSIUM ON INTERACTIVE 3 D GRAPHICS 27-30 APRIL 1997 PROVIDENCE, RI, USA, [Online] 1997, pages 49-54 , 185, XP002539648 Proceedings 1997 Symposium on Interactive 3D Graphics ACM New York, NY, USA ISBN: 0-89791-884-3 Retrieved from the Internet: URL:http://doi.acm.org/10.1145/253284.2533 06> [retrieved on 2009-07-31]

## Description

### Field of the invention

The present invention relates to an information processing method for remote assistance during assembly or maintenance operations.

Moreover, the invention relates to an apparatus that carries out such method.

### Description of the prior art

Present-day industrial machinery have a very complex design, and as a consequence maintenance or repairing operations need the intervention of a variety of specialists, often only available as members of the manufacturer's technical staff.

When machinery needs intervention, it is often required for the or each expert to travel to the site where the machinery is hosted. Travelling is expensive and takes a long time, both factors influencing the total cost of a servicing operation. Also, while the expert is in transit additional costs are due to the reduced efficiency of the faulty machine.

On the other hand, a large part of the servicing operations would not really require in-deep knowledge of a machine working principle or internal structure, and could be performed by an in-situ technician who should have at least some step-by-step basic notions on the manual tasks to be performed on the machine.

Several attempts have been made to put the in-situ technician in touch with a remote expert using a variety of communication means, ranging from voice communication to more complex data transmission technology.

In particular, for the in-situ technician Augmented Reality (AR) has been proposed for man-machine interaction, since it presents a major potential for supporting industrial operational processes. It overlays computer-generated graphical information onto a physical (real) world, by means of a see-through near-eye display controlled by a computer.
The field of view of the observer is enriched with the computer-generated images.

For example EP1157314 discloses an AR system for transmitting first information data from a technician at a first location to a remote expert at a second location. A sensor system is provided for data acquisition at the technician's site, and for evaluating them at the expert's site, assigning then real objects to stored object data, which are provided at the technician's site.

US2002010734 disclose an internetworked augmented reality (AR) system, which is mainly dedicated to entertainment and consists of one or more local stations and one or more remote stations networked together. The remote stations can provide resources not available at a local AR Station such as databases, high performance computing (HPC), and methods by which a human can interact with the person(s) at the local station.

The above known systems cannot assure that a remote expert has a clear and updated view on the actions to do, since an exchange of a number of high-quality video and data streams is required. Moreover, the above known systems cannot handle the case of multiple experts concurrently supporting the in-situ technician(s) from different remote locations.

WO2007066166 discloses a method and apparatus to process and display control instructions and technical information for carrying out a maintenance action, providing collaboration between internal technicians and remote experts. A technician has a portable computing and display device that may be arranged as a head-set, which may include a camera or other position tracking means to capture quite closely the technician's view of the equipment, including the user's position and orientation, etc. Communication is carried out using a mobile phone, or execution of the communication over the Internet is provided.

The cited prior art, like WO2007066166 do not provide any special technique to compensate for end-to-end communication latency, that has a severe impact on effective communication.

### Summary of the invention

It is therefore a feature of the invention to provide an advanced communication system used to create a virtual team of technicians performing assembly or servicing operations of complex machinery in a collaborative way forming a virtual community of geographically distributed experts and technicians.

In particular, one or more of the participating members can be located at different geographical sites with respect to the machinery, providing remote help to the in-situ technicians.

It is another feature of the invention to specify a system and a method which, in concrete operational situations, permits an effective virtual co-participation of the remote experts to the in-situ technicians actions and decisions, in order to enhance their technical ability up to perform some of the servicing operation without the need of the physical presence of the expert.

It is a further feature of the invention to provide an information processing apparatus and method for remote technical assistance in which resolution, frame rate, and network latency allow a practical, effective and fast operation.

It is a further feature of the invention to provide a system architecture organised around a centralised communication server that allows multiple experts to assist the in-situ technician(s), each of them with the freedom to participate from different geographical locations.

It is a further feature of the invention to include an explicit mechanism for the reduction and compensation of end-to-end communication latency.

These and other features are accomplished with one exemplary method for remote assistance during assembly or maintenance operations, the method comprising the steps of:
providing at least one technician at a first location and at least one expert at a second location,
exchanging information data via high-efficiency video compression means between said at least one technician and said at least one expert, through a set of communication channels, including audio and video streams, interactive 2D and 3D data,
wherein the information data are selected among video images, graphics and speech signals of the technician and wherein additional information data in the form of augmented-reality information are transmitted from the remote expert at the second location to the in situ technician at the first location, highlighting specific objects in the field of view of the technician,
said expert being equipped with a computer and videoconferencing devices;
said technician being equipped with
   a wearable computer having a radio antenna associated to said wearable computer for data transmission;
   a headset connected to said computer including headphones, a noise-suppressing microphone, one near-eye see-through AR display, and a miniature camera mounted on the display itself used to capture what is in the front of view of the technician;
characterised in that
said at least one technician and said at least one expert are arranged respectively at an in-situ-node and at a remote node of a network, said nodes communicating and exchanging data through the internet via a centralised communication server,
and in that the following steps are provided of:
   sampling in real-time the position of said headset, providing position data of said headset at a predetermined sampling time.
   streaming video images, graphics and speech signals of the technician from the in-situ-node to the remote node;
   creating by said expert said additional information data in the form of augmented-reality at least on a determined position of said streamed video images and sending back said additional information data referred to said position from said remote node to said in-situ-node
   calculating a shifted position of said additional information data according to movements of said headset occurred between two determined sampling times;
   displaying said additional information data on said see-through AR display in said shifted position.

Preferably, said position data are in the form of a 3DOF or 6DOF transformation matrix, wherein at each sampling time a transformation matrix is generated.

Preferably, said images are in the form of a succession of frames, and to each transformation matrix a frame index is associated, each transformation matrix being responsive to position changes between an actual frame and an immediately previous frame.

Preferably, said shifted position is determined by transforming the position determined by said expert by a transformation matrix corresponding all the changes occurred between a starting frame with a starting frame index and an actual frame with an actual frame index.

Advantageously, a step is provided of sending at said sampling time additional numerical data adapted to reduce end-to-end latency effects from said in-situ-node to the remote node, said additional numerical data comprising position data corresponding to movements of said headset measured at said sampling time, in particular said position data are in the form of said transformation matrix.

In a preferred embodiment, to said remote node a plurality of further experts are connected that look at said images at an expert display, said further experts displaying said additional information data in an actual shifted position customized for each further expert, said shifted position being determined by each further expert on the basis of a transformation matrix available at said remote node and corresponding to the index frame of the frame actually seen by each further expert.

According to another aspect of the invention, an apparatus for remote assistance during assembly or maintenance operations comprises:
means for exchanging information data between at least one technician at a first location and at least one expert at a second location through a set of communication channels, including audio, voice and interactive graphics, as well as 3D data,
wherein the information data are a collection of video images, graphics and speech signals of the technician and wherein additional information data in the form of augmented-reality information are transmitted from a remote expert at the second location to an in situ technician at the first location highlighting specific objects in the field of view of the technician,
a computer and videoconferencing devices to be used by said expert;
a unit to be used by said technician comprising a wearable computer having a radio antenna associated to said wearable computer for data transmission; a headset connected to said computer including headphones, a noise-suppressing microphone, one near-eye see-through AR display, and a miniature camera mounted on the display itself used to capture what is in the front of view of the technician;
characterised in that
means are provided for communicating and exchanging data between at least an in-situ-node and a remote node of a network, said nodes communicating and exchanging data through the internet via a centralised communication server,
means for sampling in real-time the position of said headset and for providing position data of said headset at a predetermined sampling time.
means for streaming video images, graphics and speech signals of the technician from the in-situ-node to the remote node;
means for creating by said expert said additional information data in the form of augmented-reality at least on one determined position of said streamed video images and sending back said additional information data referred to said position from said remote node to said in-situ-node
means for calculating a shifted position of said additional information data according to movements of said headset occurred between two determined sampling times;
means for displaying said additional information data on said see-trough AR display in said shifted position.

Preferably, said position data are in the form of a 3DOF or 6DOF transformation matrix, and said means for sampling are adapted to generate at each sampling time a transformation matrix.

Preferably, video compression means to reduce streaming bandwidth of said data are provided.

Advantageously, a hand held camera is provided connected to said computer equipped with a light source for lighting desired targets,

Advantageously, an RFID sensor is mounted on said camera to allow for the detection of parts code and associated information

Advantageously, additional automated remote computing nodes are provided to create additional video feeds, in particular auxiliary fixed cameras that are positioned by the technicians and that can be controlled by the remote experts for pan, zoom and tilt movements.

Preferably, the organisation of a multitude of in-situ technicians and remote experts situated at different geographical locations is established in a distributed virtual community for the exchange of knowledge, wherein at least one on-situ technician at one node and at least one remote expert at another node are provided communicating and exchanging data with each other.

Therefore, a virtual community of skilled specialists is created where members communicate by means of internetworked computers and several input/output devices. The virtual community can therefore be conceptualised as a group of technicians each of them equipped with a computer (computing node) plus some automated remote computing node used to provide additional video feeds. Each computing node exchanges data over a wide-area communication network. Some of these nodes can share the same physical space while other can be located at multiple geographical locations.

Preferably, the use of Augmented Reality is provided to overlap special visual markers on the objects falling inside the field of view of the operator.

Advantageously, said headset can also be equipped with a 3DOF tracking system, used to compute head movements of the in-situ technician, in such a way to compensate such movements in terms of visual displacement of the computer generated graphical markers that are overlapped on the field of view of the technician

Advantageously, said 3DOF tracking capability is used to compensate for end-to-end communication delay

Advantageously, video streaming is associated to VoiceOverIP technology.

Preferably, said video compression means comprise H.264 Compression Technology.

Preferably, video compression means are arranged in such a way that the video streams and audio streams are compressed and combined, preferably 384 Kbit/s uplink and 384 Kbit/s down link.

### Brief description of the drawings

The invention will be now shown with the following description of an exemplary embodiment thereof, exemplifying but not limitative, with reference to the attached drawings, in which:
- figure 1 shows an architecture of a virtual community communication system for remote technical assistance;
- figure 2 shows a particular embodiment of an architecture of a virtual community communication system for remote technical assistance where the nodes are arranged as sub-communities according to affinity criteria;
- figure 3 shows the architecture of figure 1 where at the computing nodes in-situ technicians, remote experts and remotely controlled video-cameras looking at the machinery are indicated;
- figures 4 to 6 show an on-field technician equipped with a wearable computing system and a special head set integrating an Augmented Reality see-through display;
- figures 7 to 8 show an on-field technician equipped also with a hand held camera;
- figure 9 shows an in-situ fixed node, composed by a remotely controlled pan-tilt-zoom camera mounted on a tripod;
- figure 10 shows a Graphic Technician Interface of the application running at a technician's node where to a technician three different streaming video data are presented.
- figure 11 shows a block diagram of a preferred working unit of an apparatus according to the invention;
- figure 12 shows a data communication scheme applied to the architecture of the virtual community communication system for remote technical assistance of figure 1 using the preferred working units of figure 11;

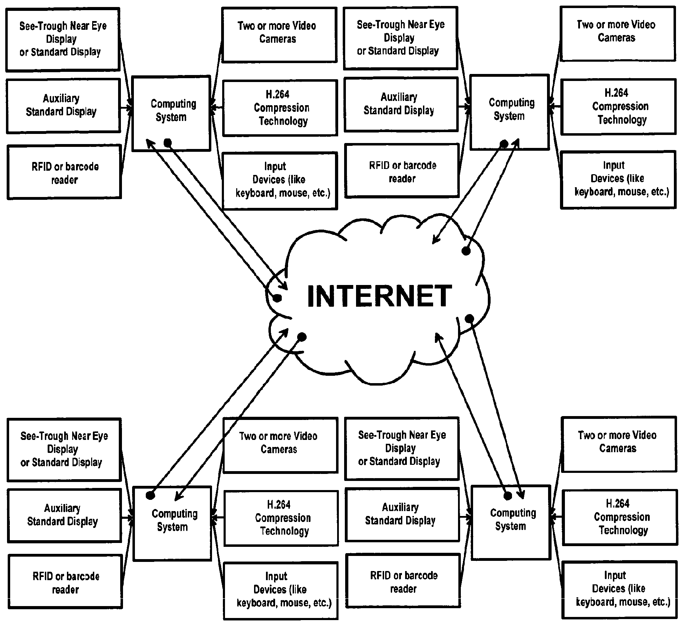

- figure 13 shows a data communication scheme applied to a different embodiment of a virtual community communication system for remote technical assistance, using a peer to peer architecture, and using the preferred working units of figure 11.
- Figure 14 shows the direction of the video data stream in the virtual community, traversing the internet from the in-situ technician headset camera towards the centralised communication server. The server retransmits the signal towards one or more expert technician(s).
- Figure 15 shows the direction of the audio data streams in the virtual community, traversing the internet between the various computing nodes and the centralised communication server.
- Figure 16 shows the direction of the data streams associated with the tracking functionalities of the invention, traversing the internet between the various computing nodes and the centralised communication server.

### Description of the preferred embodiments

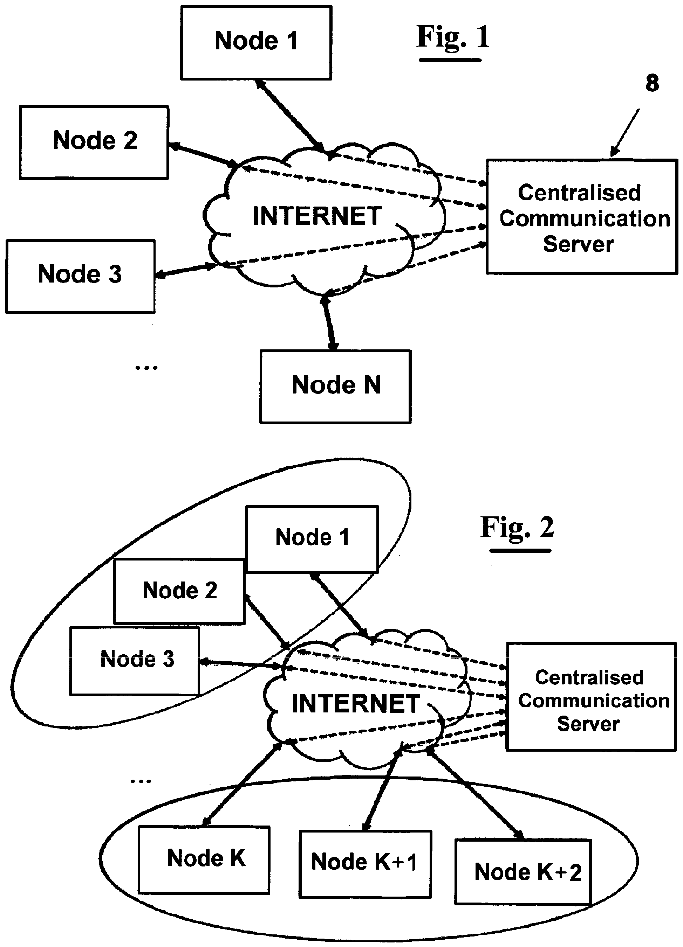

With reference to figure 1, an information processing apparatus and method are provided to establish a virtual community of geographically distributed experts and technicians for remote assistance during assembly or servicing operations of complex devices. The technician(s) and the expert(s) are arranged at nodes 1-N. Nodes 1-N communicate with one another and exchange data through the internet via a centralised communication server 8.

In addition, the centralised Communication Server 8 is used for monitoring the data, checking the data traffic, controlling the access rights and storing usage statistics.

In figure 2, the capability of the system is shown to group technicians in sub-communities which can be created according to various criteria, such as affinity in terms of servicing scenario, physical contiguity etc.

In particular, the presence of a centralised server allows for a dynamic management of how the technicians are grouped in sub-teams. In fact, multiple virtual teams-composed by some in-situ technicians, some automated cameras and some remote experts can operate at the same time on multiple locations. Members of one team can be dynamically be allocated to another team even for a limited amount of time: this maximises the possibility that experts with specific know-how can quickly be contacted and involved in the assembly/servicing operation. In addition, in-situ technicians in a particular operation can quickly be transformed in remote experts for another particular operation, changing their roles amongst the teams. This dynamical architecture assures that even the skills and knowledge of the highly trained technicians is at disposal of the collectivity.

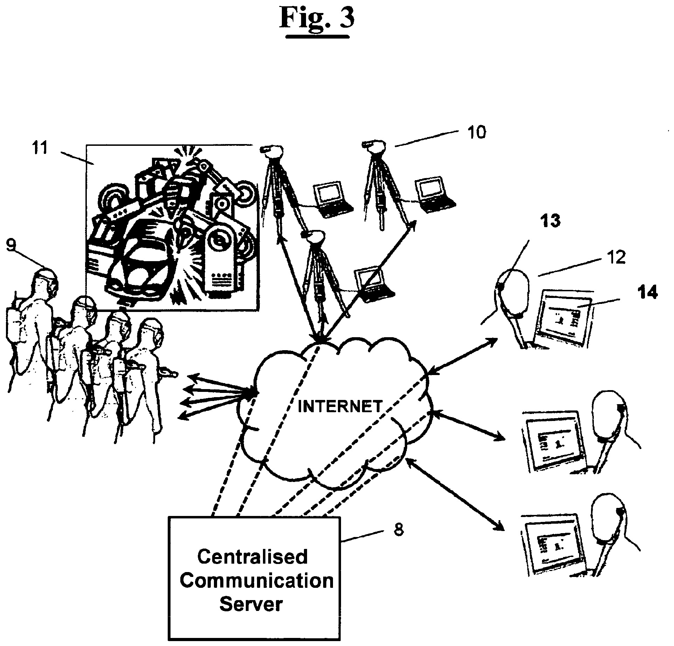

An example of remote technical assistance through the invention is shown in figure 3, where a network is illustrated managed by centralised communication server 8. Industrial machinery 11, for example large machinery located in an industrial plant, has to be serviced or assembled or inspected by technicians 9 and by auxiliary fixed video cameras 10. The experts 9 advise the technicians on how to operate.

In particular, the architecture is shown of the virtual community communication system, where the computing nodes, such as one or more remote nodes where experts 12 are present, one or more in-situ mobile nodes where a technician 9 is present, and fixed nodes 10 with remotely controllable video cameras, communicate and exchange data through the internet via centralised communication server 8.

In-situ technicians 9 use wearable equipment and move freely around the machinery 11. One or more among auxiliary remotely controlled video-cameras 10 can also be placed around the machinery 11 to provide extra video streams of the operations being performed by the technicians. Pan, zoom and tilt of these auxiliary cameras 10 can be controlled by the remote experts 12, who can adjust them in order to obtain desired images of the machine. Remote experts 12 are connected to the internet from one or more remote locations and are equipped with standard laptop computers 14 and videoconferencing devices, such as voice communication headphones 13.

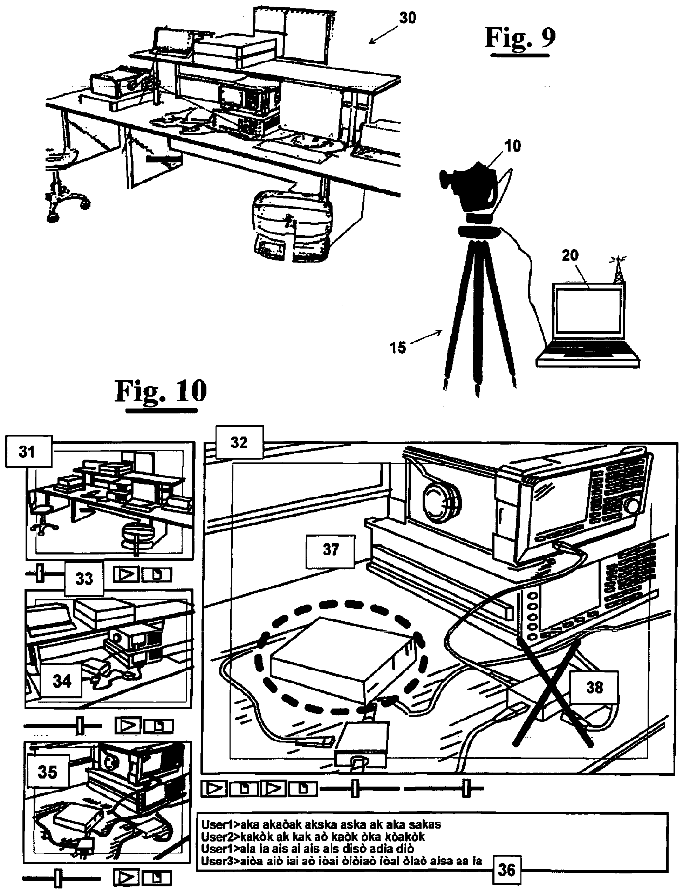

The remote experts 12 receive and examine all the information coming from the technicians 9 and the cameras 10 and can consequently send back manipulation instructions by means of voice or by remotely controlling the display of special dynamic graphical markers (described hereafter with reference to figure 10) that appear on the field of view of the in-situ technicians by means of the Augmented Reality display.

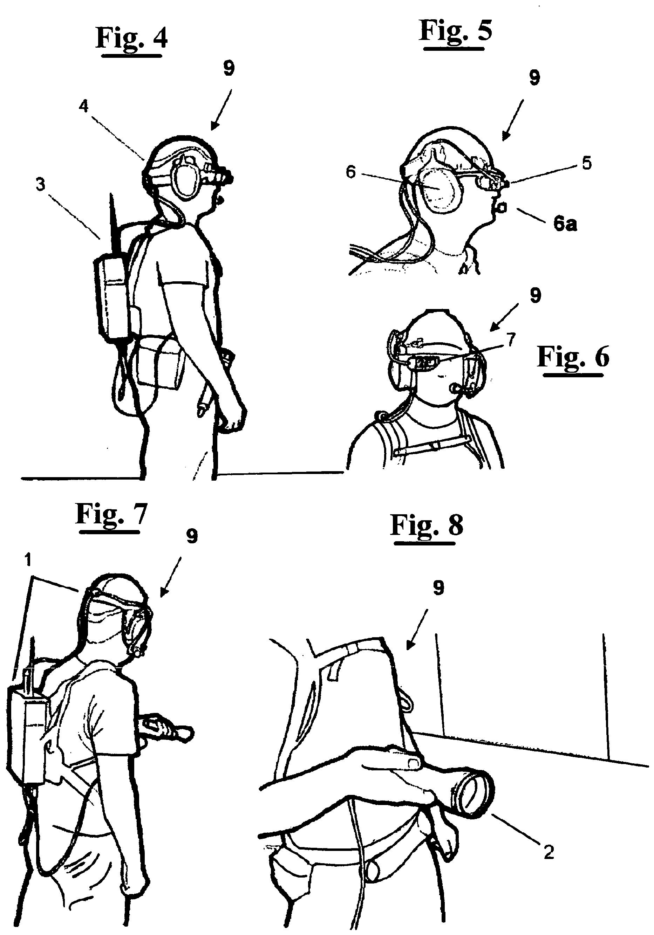

With reference to figures 4-6, a on-field technician a wearable computing system 1 and a special head set 4 integrating an Augmented Reality see-through display. The wearable AR-based apparatus is composed of a backpack 3 containing a portable computer and a helmet 4 where a video camera 5, headphones 6 with a microphone 6A and a see-through display 7 are mounted.

With reference to figures 7 and 8 an in-situ technician 12 wearing the AR-based apparatus 1 can hold an additional hand-held camera 2, having a lighting system, preferably with white LEDs, connected to the computer and that can be used to show to the remote experts 12 portions of the real scene that would be impractical to show using the video camera mounted on the headset or the fixed video cameras.

With reference to figure 9, and as previously indicated in figure 4, additionally to the computing nodes associated with in-situ technicians and remote experts, a third additional kind of computing node can be inserted in the community, comprising a remote controlled high-quality video-camera 10. It is mounted on a tripod 15 that can be placed around the machinery 11 (see fig. 4) to provide additional view-points on the operations. For example, in figure 9 instead of machinery a computer station 30 is shown; for example for remotely instructing technicians on how to assemble or service the station, or for training purposes. Each camera 10 is equipped with motorised Pan, Zoom and Tilt support that can be controlled by the remote experts 12.

The camera 10 can either be a stand-alone network camera, equipped with video compression and network streaming capabilities, or a device connected to a computer 20, capable of acquiring, compressing and transmitting video data over the network and to the centralized communication server.

Figure 10 shows what the remote expert sees on the screen of its laptop, as seen by fixed camera 10 of figure 9, as well as by the micro camera on the headset or the hand held camera, and what kind of visual feedback can produce that will be overlapped on the field of view of the in-situ technician. Figure 10 can be the Graphic Technician Interface of the application running at the expert site. Figure 10 can be however also the Graphic Technician Interface of the application running at the technicians site.

To the expert the following is presented using three different streaming video data: in 31 video data is displayed coming from the fixed camera of a fixed in-situ node; in 32 video data are shown coming from the hand-held camera operated by the in-situ operator; in 33 video data coming from the helmet camera worn by the in-situ operator. The settings of each of these views can be customized using a system of slider and buttons 34. In particular, the in-situ fixed camera can be remotely operated modifying its orientation and its zooming. The technician at the technician's site or the expert can select which of these views is currently the active view 5 and have an audio/textual chat 36 with the other operators of the community. Moreover, the expert can draw enhancing symbols and markers, 37 or 38, using a selected technician interface mouse, pen, touch-screen etc. (not shown) on the active view, causing this information to appear on the see-through display worn by the in-situ operator. The latter, in this way, can be guided with extreme precision in actions, since the guidance is contextualized in the physical space on the field of view. In the same way the expert can send other kind of useful graphical information that is superimposed on the field of view of the in-situ operator, like cad drawings, text, 3D data, animations etc.

It is advantageous that the technician at the technician's site has a see through monitor, so that the technician can see contemporaneously and on a same screen the images of the site and the images sent by the remote expert.

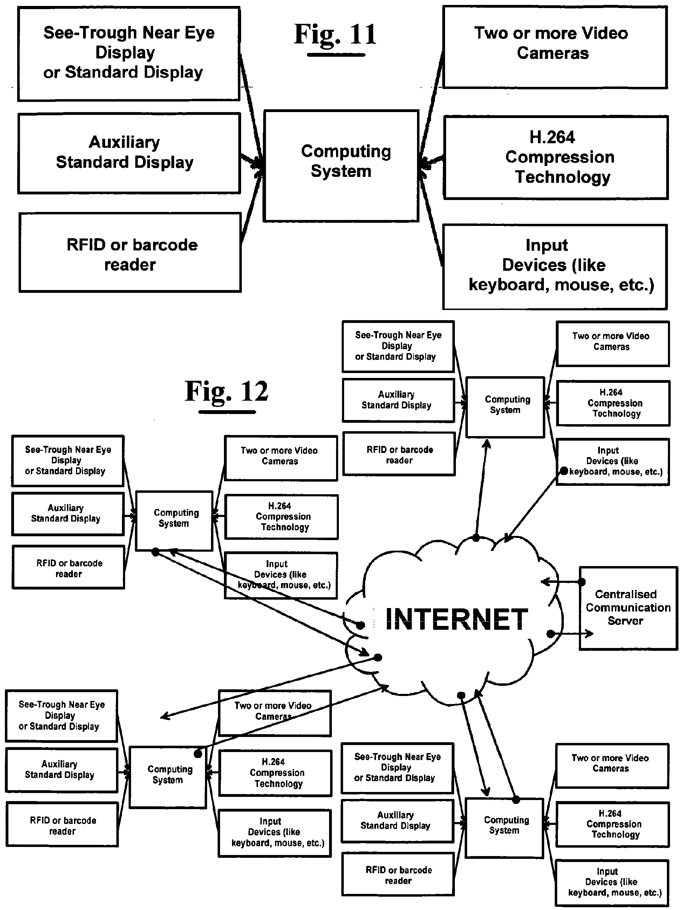

In a preferred embodiment, summarized by the block diagram of Fig. 11, the apparatus according to the invention has a computing system worn by the user that, in an advantageous embodiment of the invention, controls: a see-through near eye display or a standard display; an auxiliary standard display; a RFID or barcode reader; two or more video cameras; a H.264 compression technology; input devices (like keyboard, mouse, etc).

Finally, for an effective communication over narrow-band links to the internet the system make explicit use of video and audio compression technology. In particular, the video streams and audio streams are compressed and combined in order to stay within the limits of the standard UMTS data plans (384 Kbit/s uplink and 384 Kbit/s down link). The system is also equipped with adaptive algorithms that increase the quality of the video-audio-data streams when the availability of larger bandwidth is detected. In particular, H.264 Compression Technology can be used.

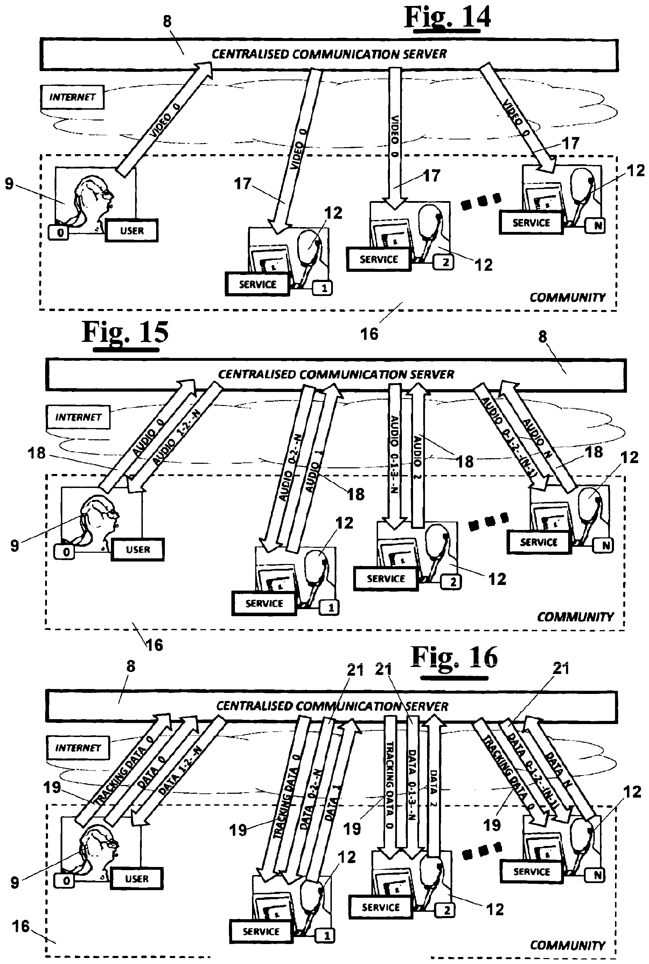

The various data streams of the virtual community are managed centrally through the internet by the centralised communication server; figure 14 illustrates the data communication scheme for the video data applied to the architecture of the virtual community communication system for remote technical assistance of figure 1; video data is flowing from the in-situ technician towards the centralised server that is used to generate in return multiple identical streams, to feed the computing node of each expert in the community - each expert can join the virtual community from a different physical location. Figure 15 illustrates the flow of data related to audio feedback: each member can speak into his/her microphone, and his/her voice will be received (with a minimal latency) by every member of the community. Each voice stream generated by a member is first sent to the centralised communication server, that is used to replicate and stream the data towards every other node.

Optionally, the headset can also be equipped with a 3DOF tracking system, used to measure rotational head movements of the skilled technician. This is used to compensate such movements in terms of visual displacement of the computer generated graphical markers that are overlapped on the field of view of the technician. Say for example that the technician is looking at a complex control panel populated by a variety of controls: the remote expert is pointing the attention to a specific object overlapping graphical markers around it. This correspondence is obviously valid only as long as the in-situ technician does not translate or rotate the head. While translational movements are not very frequent in a typical maintenance operation, small rotational movements can occur frequently with a consequent loss of the correspondence between the objects and the overlapped markers. The presence of a 3DOF or a 6DOF tracking system on the headset allows to compensate for such rotational movements, helping to track the correct object-marker correspondence. The system also takes in account the inevitable delays occurring in the communication between the in-situ technician and the remote expert.

Several solutions can be used for 3DOF or 6DOF tracking: as an example a combination of miniaturised accelerometers and gyroscopes can be mounted on the headset of the in-situ technician to achieve 6DOF tracking: Another exemplary option is provided by applying computer vision algorithms to the video feed captured by the headset camera.

In any case, the computation needed for 3DOF tracking is advantageously performed on the computing node of the in-situ technician: if accelerometers, gyroscopes or other sensor are used, these needs to be mounted on the headset of the in-situ technician to detect head movements. If computer vision techniques are used, video analysis is better performed on the in-situ technician computing node, as video data here is of pure quality, hot being affected by the quantisation errors nor time latencies introduced by the video-compression apparatus. It is therefore an important aspect of this invention to perform tracking computation on the in-situ technician computing node, and, as tracking data is available, precisely associate this data to each frame of the video stream and distributed the result to all the others members of the virtual community.

Figure 16 illustrates the data communication scheme for the tracking data applied to the architecture of the virtual community communication system for remote technical assistance of figure 1; tracking data is flowing from the in-situ technician towards the centralised server that is used to generate in return multiple identical streams, to feed the computing node of each expert in the community.

An essential aspect of the invention is how tracking data is advantageously used to allow the highlighting of specific objects and to compensate for data communication delays inside the virtual community. An introduction of the problem is necessary: end-to-end communication delay is a fundamental factor for the usability of any communication apparatus. In the present apparatus, the remote expert(s) perceive the environment in front of the in-situ technician with a certain delay; this is mainly due to the following factors: video acquisition time delay -the time needed to the computing node to sample and store in digital form the image coming from the camera(s)-, video compression time delay -the time necessary to execute the complex compression algorithms used to reduce bandwidth requirements, - network traversal delay -the time needed for the data to traverse the internet, going through the communication server and reaching the expert(s)computing node, decompression and display time delay - the time needed for the stream to get converted back in a digital image and visualised on the monitor of the expert(S). Moreover, the expert will look at this moving images and will need some time to decide what object in the image should be highlighted by the invention in the field of view of the in-situ-technician; depending on the reactivity of the expert, this delay can actually be quite large. Once a decision is taken, the expert will use mouse and keyboard to specify the selected object. Information about this object will then have to traverse the network back to the computing node of the in-situ technician. Even if this kind of data is lightweight and therefore not affected by significant compression/decompression delays, the latency due to network traversal will still be significant.

By the time the in-situ technician receive this data, he/she might have moved considerably in front of the machine: very commonly any correspondence of what is in front of him and what was selected on the screen of the expert is lost. Without tracking, icons and markers placed by the expert in the field of view of the technician might be completely misplaced, impeding effective visual guidance from the expert to the technician. Also, as multiple experts can be at different locations, each of them will experience a different amount of network latency. In this scenario, communication can be extremely difficult without mechanism that allows some form of time-spatial synchronisation.

It is therefore a fundamental aspect of our invention to compensate for this latency effects embedding tracking data in each frame of the video stream sent from the technician to the expert(s). This tracking data is used by the various computing nodes in the virtual community to insure that markers placed by the expert(s) on their image space are then properly converted in to the image space of each other community member, including the in-situ technician and the other remote experts. According to an embodiment of the method, every 100 milliseconds the video camera samples the image in front of the technician. The image changes over time due to the movements of the technician, and each image is compressed and sent to the internet. Such sequence of images are then received by the expert(s) of the virtual community. As discussed, each image arrives at the expert with a certain amount of delay. In order to better study the images and select and highlight a specific object in the image, the expert can "freeze" the video sequence on his side, introducing, some additional delay between what is in front of the technician and what is seen by him. When the selection of the object is complete, the video sequence is released and the data of the selection is sent from the expert computing node to the technician computing node. Obviously, a screen-to screen-correspondence would be lost due to the round-trip delay of this process; here is when the tracking information embedded in each image is used to reconstruct such correspondence: the actual tracking data of the in-situ technician gets confronted with the tracking data embedded in the image "frozen" by the technician. Using this information, the image markers position sent by the remote expert gets transformed into the current image-space of the image-technician, and the marker displayed at the proper position. In this way, the correspondence between the object selected by the expert and the object seen by the in-situ technician is maintained regardless of the latency due to compression/transmission of data.

It is a fundamental aspect of the present invention to replicate the transformation process not only for the in-situ technician, but on each of the computing node of the virtual community. As each expert can experience a different latency in the communication, the before mentioned process of image-space transformation using embedded tracking data is repeated for each of them. In this way every expert can see the markers placed by the other experts on the same video stream - each expert has a specific marker screen colour (for instance BLUE for an expert 1, GREEN for an other experts on the same video stream - each expert has a specific expert 2, RED for expert 3 and so on). This form of visual coordination between the whole community, associated to the unified conference voice communication between the members allows for an innovative and very effective collaborative work, an essential advantage of the present invention.

Figure 14 illustrates the data communication scheme for the video data applied to the architecture of the virtual community communication system for remote technical assistance of figure 1. Video data is flowing from the in-situ technician 9 towards the centralised server 8 that is used to generate in return multiple identical streams 17, to feed the computing node of each expert 12 in the community; each expert 12 can join the virtual community 16 from a different physical location.

Figure 15 illustrates the flow of data related to audio feedback: each member 9 or 12 can speak into his/her microphone (not indicated), and his/her voice will be received, with a minimal latency, by every member 9-12 of the community 16. Each voice stream 18 generated by a member 9 or 12 is first sent to the centralised communication server 8, that is used to replicate and stream the data towards every other node.

Figure 16 illustrates the data communication scheme for the tracking data applied to the architecture of the virtual community 16 communication system for remote technical assistance of figure 1. Tracking data 19 is flowing from the in-situ technician 9 towards the centralised server 8 that is used to generate in return multiple identical streams 21, to feed the computing node of each expert 12 in the community 16.

The method for remote assistance during assembly or maintenance operations, according to the invention, is described below. The step of providing at least one technician 9 at a first location and at least one expert 12 at a second location is followed by a step of exchanging information data via high-efficiency video compression means between said at least one technician 9 and said at least one expert 12, through a set of communication channels, including audio and video streams, interactive 2D and 3D data. The information data are selected among video images, graphics and speech signals of the technician 9 and additional information data in the form of augmented-reality information, in particular a marker M, are transmitted from the remote expert 12 at the second location to the in situ technician 9 at the first location, highlighting a specific object in the field of view of the technician 9. The expert 12 is equipped with a computer and videoconferencing devices, not displayed, while the technician 9 is equipped as described with a wearable computer 3 having a radio antenna (figure 4) associated to said wearable computer for data transmission, and wears a headset connected to said computer including headphones 6, a noise-suppressing microphone 6A, one near-eye see through AR display 7, and a miniature camera 5 mounted on the display itself used to capture what is in the front of view of the technician (Fig. 6). Peculiar to the method is that the technician 9 and the expert 12 are arranged respectively at an in-situ-node and at a remote node of a network, in particular an end-to end network ; the nodes communicate and exchange data through the internet via a centralised communication server 8 (figs. 14-16).

Still peculiar to the method is a step of sampling in real-time the position of the technician headset 9, providing position data at a predetermined sampling time, as well as a step of streaming video images, graphics and speech signals of the technician 9 from the in-situ-node to the remote node. A step of creating additional information data is then carried out by the expert 12 in the form of augmented-reality, in particular a marker, at least on a determined position, for instance the position of an object, of the streamed video images and sending back the additional information data referred to the position of an object, from the remote node to the in-situ-node. A subsequent step of calculating a shifted position of the additional information data according to movements of the headset between two determined sampling times is finally followed by a step of displaying the additional information data on the see-through AR display 7 (figure 4) in said shifted position.

The process and streams of tracking data when there are multiple experts 12 who assist the in-situ technician 9. As each expert 12 can experience a different latency in the communication, the before mentioned process of image-space transformation using embedded tracking data is repeated for each of them. In this way, every expert 12 can see the markers placed by the other experts 12 on the same video stream.

Every member of the community providing an example of three experts 12, assisting the in-situ technician 9 (Fig. 14-16), with two experts drawing two respective markers on the video streams.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. A method for remote assistance during assembly or maintenance operations, the method comprising the steps of:
providing at least one technician (9) at a first location and at least one expert (12) at a second location,
exchanging information data via high-efficiency video compression means between said at least one technician and said at least one expert, through a set of communication channels, including audio and video streams, interactive 2D and 3D data,
wherein the information data are selected among video images, graphics and speech signals of the technician and wherein additional information data in the form of augmented-reality (AR) information are transmitted from the remote expert at the second location to the in situ technician at the first location, highlighting specific objects in the field of view of the technician,
said expert being equipped with a computer (14) and videoconferencing devices; (13) said technician being equipped with
a wearable computer (1) having a radio antenna associated to said wearable computer for data transmission;
a headset (4) connected to said computer including headphones, (6) a noise-suppressing microphone, (6A) one near-eye see-through AR display, (7) and a miniature camera mounted on the display itself used to capture what is in the front of view of the technician;
wherein said at least one technician and said at least one expert are arranged respectively at an in-situ-node and at a remote node of a network, said nodes communicating and exchanging data through the internet via a centralised communication server, (8) wherein the following steps are provided of:
sampling in real-time the position of said headset, providing position data of said headset at a predetermined sampling time wherein said sampling is carried out by a 3DOF tracking system arranged to measure small rotational head movements of said technician;
streaming video images, graphics and speech signals of the technician from the in-situ-node to the remote node;
creating by said expert said additional information data in the form of augmented-reality at least on a determined position of said streamed video images and sending back said additional information data referred to said determined position from said remote node to said in-situ-node
calculating a shifted position of said additional information data according to movements of said headset;
displaying said additional information data on said see-through AR display in said shifted position,
wherein said position data as sampled by said 3DOF tracking system arranged to measure small rotational head movements of said technician are in the form of a 3DOF transformation matrix, wherein at each sampling time a transformation matrix is generated,
wherein said images are in the form of a succession of frames, and to each transformation matrix a frame index is associated, each transformation matrix being responsive to position changes between an actual frame and an immediately previous frame, and
wherein said shifted position is calculated by transforming said determined position, as determined by said expert, by a transformation matrix which corresponds to all the changes occurred between a starting frame with a starting frame index and an actual frame with an actual frame index.

2. Method according to claim 1, wherein a step is provided of sending at said sampling time additional numerical data adapted to reduce end-to-end latency effects from said in-situ-node to the remote node, said additional numerical data comprising position data corresponding to movements of said headset measured at said sampling time, in particular said position data are in the form of said transformation matrix.

3. Method according to claim 1, wherein to said remote node a plurality of further experts are connected that look at said images at an expert display, said further experts displaying said additional information data in an actual shifted position customized for each further expert, said shifted position being determined by each further expert on the basis of a transformation matrix available at said remote node and corresponding to the index frame of the frame actually seen by each further expert.

4. Method according to claim 1, wherein said step of creating additional information data is carried out by an expert in the form of augmented-reality consisting of a marker, at least on a determined position, in particular the position of an object.

5. Method according to claim 1, wherein the organisation of a multitude of in-situ technicians and remote experts situated at different geographical locations is established in a distributed virtual community for the exchange of knowledge, wherein at least one in-situ technician at one node and at least one remote expert at another nodes are provided communicating and exchanging data with each other.

6. An apparatus for remote assistance during assembly or maintenance operations, comprises:
means for exchanging information data between at least one technician (9) at a first location and at least one expert (12) at a second location through a set of communication channels, selected among audio, voice and interactive graphics, as well as 3D data,
wherein the information data are a collection of video images, graphics and speech signals of the technician and wherein additional information data in the form of augmented-reality information are transmitted from a remote expert at the second location to an in situ technician at the first location highlighting specific objects in the field of view of the technician,
a computer (14) and videoconferencing (13) devices to be used by said expert;
a unit to be used by said technician comprising a wearable computer (1) having a wi-fi antenna associated to said wearable computer for data transmission; a headset (4) connected to said computer including headphones, (6) a noise-suppressing microphone, (6A) one near-eye see-through AR display (7), and a miniature camera mounted on the display itself used to capture what is in the front of view of the technician;
**further comprising**
- means for communicating and exchanging data between at least an in-situ-node and a remote node of a network, said nodes communicating and exchanging data through the internet via a centralised communication server (8),
- means for sampling in real-time the position of said headset and for providing position data of said headset at a predetermined sampling time, wherein said sampling is carried out by a 3DOF tracking system arranged to measure small rotational head movements of said technician
- means for streaming video images, graphics and speech signals of the technician from the in-situ-node to the remote node;
- means for creating by said expert said additional information data in the form of augmented-reality at least on one determined position of said streamed video images and sending back said additional information data referred to said determined position from said remote node to said in-situ-node
- means for calculating a shifted position of said additional information data according to movements of said headset
- means for displaying said additional information data on said see-trough AR display in said shifted position;
wherein said position data, as sampled by said 3DOF tracking system arranged to measure small rotational head movements of said technician, are in the form of a 3DOF transformation matrix, and said means for sampling are adapted to generate at each sampling time a transformation matrix,
wherein said images are in the form of a succession of frames, and to each transformation matrix a frame index is associated, each transformation matrix being responsive to position changes between an actual frame and a immediately previous frame, and
wherein said shifted position is calculated by transforming said determined position, as determined by said expert, by a transformation matrix which corresponds to all the changes occurred between a starting frame with a starting frame index and an actual frame with an actual frame index.

7. The apparatus according to claim 6, wherein video compression means to reduce streaming bandwidth of said data are provided.

8. The apparatus according to claim 9, wherein a hand held camera is provided connected to said computer equipped with a light source for lighting desired targets in particular an RFID sensor is mounted on said camera to allow for the detection of parts code and associated information.

9. Apparatus according to claim 9, wherein additional automated remote computing nodes are provided to create additional video feeds, in particular auxiliary fixed cameras that are positioned by the technicians and that can be controlled by the remote experts for pan, zoom and tilt movements.

10. Apparatus according to claim 9, wherein Augmented Reality means are provided to overlap special visual markers on the objects falling inside the field of view of the operator.

11. Apparatus according to claim9, wherein said video streaming is associated to VoiceOverIP technology.

12. Apparatus according to claim 7, wherein video compression means are arranged in such a way that the video streams and audio streams are compressed and combined, preferably 384 Kbit/s uplink and 384 Kbit/s down link, in particular said video compression means comprises H.264 Compression Technology.

## Patentansprüche

1. Verfahren zur Fernunterstützung während Montage- oder Wartungsoperationen, wobei das Verfahren die folgenden Schritte umfasst:
Bereitstellen wenigstens eines Technikers (9) an einem ersten Standort und wenigstens eines Fachmanns (12) an einem zweiten Standort;
Austauschen von Informationsdaten über hoch effiziente Videokomprimierungsmittel zwischen dem wenigstens einen Techniker und dem wenigstens einen Fachmann über eine Gruppe von Kommunikationskanälen, einschließlich Audio- und Videostreams interaktive 2D- und 3D-Daten;
wobei die Informationsdaten ausgewählt sind aus Videobildern, Grafiken und Sprachsignalen des Technikers, und wobei zusätzliche Informationsdaten in Form von Augmented Reality-Informationen (AR-Informationen) von dem entfernten Fachmann an dem zweiten Standort zu dem Techniker vor Ort an dem ersten Standort übermittelt werden, welche spezifische Objekte in dem Sichtfeld des Technikers hervorheben;
wobei der Fachmann mit einem Computer (14) und Videokonferenzvorrichtungen ausgestattet ist;
wobei der Techniker ausgestattet ist mit:
einem tragbaren Computer (1) mit einer Funkantenne, die dem tragbaren Computer zur Datenübermittlung zugeordnet ist;
einem Headset (4), das mit dem Computer verbunden ist und Kopfhörer (6) aufweist;
einem rauschunterdrückenden Mikrofon (6A), einem transparenten AR-Display (7) in Augennähe;
und mit einer Miniaturkamera, die an dem Display selbst angebracht ist und verwendet wird, um das zu erfassen, was im Sichtfeld des Technikers ist;
wobei der wenigstens eine Techniker und der wenigstens eine Fachmann entsprechend an einem Knoten vor Ort und einem entfernten Knoten eines Netzwerks angeordnet sind, wobei die Knoten über das Internet über einen zentralen Kommunikationsserver kommunizieren und Daten austauschen,
wobei die folgenden Schritte vorgesehen sind:
Abtasten der Position des Headsets in Echtzeit, Bereitstellen von Positionsdaten des Headsets in einem vorbestimmten Abtastintervall wobei das Abtasten durch ein 3DOF-Ortungssystem durchgeführt wird, das so angeordnet ist, dass es kleine Drehbewegungen des Kopfes des Technikers misst;
Streamen von Videobildern, Grafiken und Sprachsignalen des Technikers von dem Knoten vor Ort zu dem entfernten Knoten;
Erzeugen der zusätzlichen Informationsdaten durch den Fachmann in Form von Augmented Reality zumindest an einer bestimmten Position der gestreamten Videobilder und Zurücksenden der zusätzlichen Informationsdaten, die sich auf die bestimmte Position beziehen, von dem entfernten Knoten an den Knoten vor Ort;
Berechnen einer verschobenen Position der zusätzlichen Informationsdaten gemäß Bewegungen des Headsets;
Anzeigen der zusätzlichen Informationsdaten auf dem transparenten AR-Display an der verschobenen Position;
wobei die von dem 3DOF-Ortungssystem, das zum Messen kleiner Bewegungen des Kopfes des Technikers angeordnet ist, abgetasteten Positionsdaten in Form einer 3DOF-Transformationsmatrix gegeben sind, wobei zu jeder Abtastzeit eine Transformationsmatrix erzeugt wird;
wobei die Bilder in Form einer Folge von Frames gegeben sind, und wobei jeder Transformationsmatrix ein Frame-Index zugeordnet ist, wobei jede Transformationsmatrix auf Positionsveränderungen zwischen einem tatsächlichen Frame und einem unmittelbar vorangehenden Frame anspricht; und
wobei die verschobene Position berechnet wird durch Transformation der durch den Fachmann bestimmten bestimmten Position durch eine Transformationsmatrix, die allen Änderungen entspricht, die zwischen einem Start-Frame mit einem Start-Frame-Index und einem tatsächlichen Frame mit einem tatsächlichen Frame-Index erfolgt sind.

2. Verfahren nach Anspruch 1, wobei ein Schritt des Sendens zusätzlicher numerischer Daten zu einer Abtastzeit vorgesehen ist, der dazu dient, die Ende-zu-Ende-Latenzeffekte von dem Knoten vor Ort zu dem entfernten Knoten zu reduzieren, wobei die zusätzlichen numerischen Daten Positionsdaten umfassen, die Bewegen des Headsets entsprechen, die zu der Abtastzeit gemessen worden sind, wobei die Positionsdaten insbesondere in Form der Transformationsmatrix gegeben sind.

3. Verfahren nach Anspruch 1, wobei mehrere weitere Fachmänner mit dem entfernten Knoten verbunden sind, welche die Bilder auf einem Display für die Fachmänner betrachten, wobei die zusätzlichen Informationsdaten den weiteren Fachmännern in einer tatsächlichen verschobenen Position, individuell angepasst für jeden weiteren Fachmann angezeigt werden, wobei die verschobene Position bestimmt wird durch jeden weiteren Fachmann auf der Basis einer an dem entfernten Knoten verfügbaren Transformationsmatrix und entsprechend dem Index-Frame des tatsächlich von jedem weiteren Fachmann gesehenen Frames.

4. Verfahren nach Anspruch 1, wobei der Schritt des Erzeugens zusätzlicher Informationsdaten durch einen Fachmann ausgeführt wird in Form von Augmented Reality, die einen Marker umfasst, wenigstens an einer bestimmten Position, insbesondere der Position eines Objekts.

5. Verfahren nach Anspruch 1, wobei die Organisation einer Vielzahl von Technikern vor Ort und entfernten Fachmännern, die sich an verschiedenen geografischen Standorten befinden, in einer verteilten virtuellen Gemeinschaft zum Wissensaustausch geschaffen wird, wobei wenigstens ein Techniker vor Ort und wenigstens ein entfernter Fachmann an einem anderen Knoten vorgesehen sind, die miteinander kommunizieren und Daten austauschen.

6. Vorrichtung zur Fernunterstützung während Montage- oder Wartungsoperationen, umfassend:
Mittel zum Austauschen von Informationsdaten zwischen wenigstens einem Techniker (9) an einem ersten Standort und wenigstens einem Fachmann (12) an einem zweiten Standort über eine Gruppe von Kommunikationskanälen, die ausgewählt sind aus Audio, Sprache und interaktiven Grafiken sowie 3D-Daten;
wobei die Informationsdaten eine Ansammlung von Videobildern, Grafiken und Sprachsignalen des Technikers sind, und wobei zusätzliche Informationsdaten in Form von Augmented Reality-Informationen von einem entfernten Fachmann an einem zweiten Standort an einen Techniker vor Ort an einem ersten Standort übermittelt werden, welche spezifische Objekte im Sichtfeld des Technikers hervorheben;
einen Computer (14) und Videokonferenzvorrichtungen (13) zur Verwendung durch den Fachmann;
eine Einheit zur Verwendung durch den Techniker, umfassend einen tragbaren Computer (1) mit einer dem tragbaren Computer zugeordneten WLAN-Antenne zur Datenübermittlung; ein Headset (4), das mit dem Computer verbunden ist, mit einem Kopfhörer (6), einem rauschunterdrückenden Mikrofon (6A), einem transparenten AR-Display (7) in Augennähe und mit einer Miniaturkamera, die an dem Display selbst angebracht ist und verwendet wird, um das zu erfassen, was im Sichtfeld des Technikers ist;
ferner umfassend
- Mittel zur Kommunikation und zum Austausch von Daten zwischen der wenigstens einem Knoten vor Ort und einem entfernten Knoten eines Netzwerks, wobei die Knoten über das Internet über einen zentralen Kommunikationsserver (8) kommunizieren und Daten austauschen,
- Mittel zum Abtasten der Position des Headsets in Echtzeit und zum Bereitstellen von Positionsdaten des Headsets zu einer vorbestimmten Abtastzeit, wobei das Abtasten durch ein 3DOF-Ortungssystem durchgeführt wird, das so angeordnet ist, dass es kleine Drehbewegungen des Kopfes des Technikers misst;
- Mittel zum Streamen von Videobildern, Grafiken und Sprachsignalen des Technikers von dem Knoten vor Ort zu dem entfernten Knoten;
- Mittel zum Erzeugen der zusätzlichen Informationsdaten durch den Fachmann in Form von Augmented Reality zumindest an einer bestimmten Position der gestreamten Videobilder und Zurücksenden der zusätzlichen Informationsdaten, die sich auf die bestimmte Position beziehen, von dem entfernten Knoten an den Knoten vor Ort;
- Mittel zum Berechnen einer verschobenen Position der zusätzlichen Informationsdaten gemäß Bewegungen des Headsets;
- Mittel zum Anzeigen der zusätzlichen Informationsdaten auf dem transparenten AR-Display an der verschobenen Position;
wobei die von dem 3DOF-Ortungssystem, das zum Messen kleiner Bewegungen des Kopfes des Technikers angeordnet ist, abgetasteten Positionsdaten in Form einer 3DOF-Transformationsmatrix gegeben sind, und wobei die Mittel zum Abtasten zu jeder Abtastzeit eine Transformationsmatrix erzeugen können;
wobei die Bilder in Form einer Folge von Frames gegeben sind, und wobei jeder Transformationsmatrix ein Frame-Index zugeordnet ist, wobei jede Transformationsmatrix auf Positionsveränderungen zwischen einem tatsächlichen Frame und einem unmittelbar vorangehenden Frame anspricht; und
wobei die verschobene Position berechnet wird durch Transformation der durch den Fachmann bestimmten bestimmten Position durch eine Transformationsmatrix, die allen Änderungen entspricht, die zwischen einem Start-Frame mit einem Start-Frame-Index und einem tatsächlichen Frame mit einem tatsächlichen Frame-Index erfolgt sind.

7. Vorrichtung nach Anspruch 6, wobei Videokomprimierungsmittel zur Reduzierung der Streaming-Bandbreite der Daten bereitgestellt sind.

8. Vorrichtung nach Anspruch 9, wobei eine Handkamera bereitgestellt ist, die mit dem Computer verbunden ist und mit einer Lichtquelle zur Beleuchtung gewünschter Ziele ausgestattet ist, wobei insbesondere ein RFID-Sensor an der Kamera angebracht ist, um die Erkennung von Teilekennungen und zugeordneten Informationen zu ermöglichen.

9. Vorrichtung nach Anspruch 9, wobei zusätzliche automatisierte entfernte Rechenknoten vorgesehen sind, um zusätzliche Videozuspielungen zu erzeugen, insbesondere zusätzliche fixierte Kameras, die durch die Techniker positioniert werden und durch die entfernten Fachmänner für Schwenk-, Zoom- und Neigungsbewegungen gesteuert werden können.

10. Vorrichtung nach Anspruch 9, wobei Augmented Reality-Mittel bereitgestellt sind zur Überlappung spezieller visueller Marker an den Objekten, die innerhalb des Sichtfelds der Bedienungsperson liegen.

11. Vorrichtung nach Anspruch 9, wobei das Videostreaming VoiceOverIP-Technologie zugeordnet ist.

12. Vorrichtung nach Anspruch 7, wobei die Mittel zur Videokomprimierung so angeordnet sind, dass die Videostreams und die Audiostreams komprimiert und kombiniert werden, vorzugsweise mit 384 Kbit/s im Uplink und mit 384 Kbit/s im Downlink, wobei die Mittel zur Videokomprimierung insbesondere die Komprimierungstechnologie H.264 umfassen.

## Revendications

1. Procédé d'assistance à distance pendant des opérations d'assemblage ou de maintenance, le procédé comprenant les étapes consistant à :
fournir au moins un technicien (9) à un premier emplacement et au moins un expert (12) à un second emplacement,
échanger des données d'information par l'intermédiaire d'un moyen de compression vidéo haute efficacité entre ledit au moins un technicien et ledit au moins un expert, par l'intermédiaire d'un ensemble de canaux de communication, y compris des flux audio et vidéo, des données 2D et 3D interactives,
les données d'information étant choisies parmi des images vidéo, des graphiques et des signaux vocaux du technicien et des données d'information supplémentaires sous la forme de d'informations de réalité augmentée (AR) étant transmises de l'expert à distance situé au second emplacement au technicien sur place situé au premier emplacement, en mettant en évidence des objets spécifiques dans le champ de vision du technicien,
ledit expert étant équipé d'un ordinateur (14) et de dispositifs de vidéoconférence (13) ;
ledit technicien étant équipé d'un ordinateur portable (1) ayant une antenne radio associée audit ordinateur portable pour la transmission de données ; d'un casque (4) connecté audit ordinateur, y compris des écouteurs (6), d'un microphone à suppression de bruit (6A), d'un écran AR transparent près de l'oeil (7), et d'une caméra miniature montée sur l'écran lui-même utilisée pour capter ce qui se trouve dans le champ de vision avant du technicien ;
ledit au moins un technicien et ledit au moins un expert étant situés respectivement à un noeud sur place et à un noeud à distance d'un réseau, lesdits noeuds communiquant et échangeant des données par l'intermédiaire d'internet via un serveur de communication centralisé (8),
comprenant les étapes suivantes consistant à :
échantillonner en temps réel la position dudit combiné, fournir les données de position dudit casque à un temps d'échantillonnage prédéfini, ledit échantillonnage étant réalisé par un système de suivi 3DOF conçu pour mesurer les petits mouvements rotatifs de la tête dudit technicien :
diffuser en flux continu des images vidéo, des graphiques et des signaux vocaux du technicien du noeud sur place au noeud à distance ;
créer par ledit expert lesdites données d'information supplémentaires sous la forme de réalité augmentée au moins sur une position déterminée desdites images vidéo diffusées en flux continu et renvoyer lesdites données d'information supplémentaires à ladite position déterminée dudit noeud à distance audit noeud sur place ;
calculer une position décalée desdites données d'information supplémentaires selon des mouvements dudit combiné ;
afficher lesdites données d'information supplémentaires sur ledit écran transparent dans ladite position décalée,
lesdites données de position telles qu'échantillonnées par ledit système de suivi 3DOF conçues pour mesurer les petits mouvements rotatifs de la tête dudit technicien étant sous la forme d'une matrice de transformation 3DOF, à chaque temps d'échantillonnage une matrice de transformation étant générée,
lesdites images étant sous la forme d'une succession de trames, et un indice de trame étant associé à chaque matrice de transformation, chaque matrice de transformation étant sensible aux changements de position entre une trame réelle et une trame immédiatement précédente, et
ladite position décalée étant calculée en transformant ladite position déterminée, telle que déterminée par ledit expert, par une matrice de transformation qui correspond à tous les changements survenus entre une trame de départ avec un indice de trame de départ et une trame réelle avec un indice de trame réelle.

2. Procédé selon la revendication 1, une étape consistant à envoyer audit temps d'échantillonnage des données numériques supplémentaires conçues pour réduire les effets de latence de bout en bout dudit noeud sur place au noeud à distance, lesdites données numériques supplémentaires comprenant des données de position correspondant aux mouvements dudit casque mesurés audit temps d'échantillonnage, en particulier lesdites données de position étant sous la forme de ladite matrice de transformation.

3. Procédé selon la revendication 1, une pluralité d'autres experts qui regardent lesdites images sur un écran d'expert étant connectés audit noeud à distance, lesdits autres experts affichant lesdites données d'information supplémentaires dans une position décalée réelle personnalisée pour chaque autre expert, ladite position décalée étant déterminée par chaque autre expert en fonction d'une matrice de transformation disponible au niveau dudit noeud à distance et correspondant à la trame d'indice de la trame réellement vue par chaque autre expert.

4. Procédé selon la revendication 1, ladite création de données d'information supplémentaires étant effectuée par un expert sous la forme de réalité augmentée consistant en un marqueur, au moins sur une position déterminée, plus précisément la position d'un objet.

5. Procédé selon la revendication 1, l'organisation d'une multitude de techniciens sur place et d'experts à distance situés à différents emplacements géographiques étant établie dans une communauté virtuelle distribuée pour l'échange de connaissances, au moins un technicien sur place au niveau d'un noeud et au moins un expert à distance à d'autres noeuds étant fournis pour communiquer et échanger des données l'un avec l'autre.

6. Appareil d'assistance à distance pendant des opérations d'assemblage ou de maintenance, comprenant :
un moyen pour échanger des données d'information entre au moins un technicien (9) à un premier emplacement et au moins un expert (12) à un second emplacement par l'intermédiaire d'un ensemble de canaux de communication, sélectionnés parmi l'audio, la voix et les graphiques interactives, ainsi que des données 3D,
les données d'information étant une collection d'images vidéo, de graphiques et de signaux vocaux du technicien et des données d'information supplémentaires sous la forme d'informations de réalité augmentée étant transmises d'un expert à distance situé au second emplacement à un technicien sur place situé au premier emplacement, en mettant en évidence des objets spécifiques dans le champ de vision du technicien,
un ordinateur (14) et des dispositifs de vidéoconférence (13) devant être utilisés par ledit expert ;
une unité devant être utilisée par ledit technicien comprenant un ordinateur portable (1) ayant une antenne wi-fi associée audit ordinateur portable pour la transmission de données ; un casque (4) connecté audit ordinateur, y compris des écouteurs (6), un microphone à suppression de bruit (6A), un écran AR transparent près de l'oeil (7), et une caméra miniature montée sur l'écran lui-même utilisée pour capter ce qui se trouve dans le champ de vision avant du technicien ;
comprenant en outre :
un moyen pour communiquer et échanger des données entre au moins un noeud sur place et un noeud à distance d'un réseau, lesdits noeuds communiquant et échangeant des données par l'intermédiaire d'internet via un serveur de communication centralisé (8) ;
un moyen pour échantillonner en temps réel la position dudit combiné et pour fournir des données de position dudit casque à un temps d'échantillonnage prédéfini, ledit échantillonnage étant réalisé par un système de suivi 3DOF conçu pour mesurer des petits mouvements rotatifs de la tête dudit technicien ;
un moyen pour diffuser en flux continu des images vidéo, des graphiques et des signaux vocaux du technicien du noeud sur place au noeud à distance ;
un moyen pour créer par ledit expert lesdites données d'information supplémentaires sous la forme de réalité augmentée au moins sur une position déterminée desdites images vidéo diffusées en flux continu et renvoyer lesdites données d'information supplémentaires relatives à ladite position déterminée dudit noeud à distance audit noeud sur place ;
un moyen pour calculer une position décalée desdites données d'information supplémentaires selon des mouvements dudit combiné ;
un moyen pour afficher lesdites données d'information supplémentaires sur ledit écran transparent AR ladite position décalée ;
lesdites données de position, telles qu'échantillonnées par ledit système de suivi 3DOF conçu pour mesurer les petits mouvements rotatifs de la tête dudit technicien, étant sous la forme d'une matrice de transformation 3DOF, et ledit moyen d'échantillonnage étant conçu pour générer à chaque temps d'échantillonnage une matrice de transformation,
lesdites images étant sous la forme d'une succession de trames, et un indice de trame étant associé à chaque matrice de transformation, chaque matrice de transformation étant sensible aux changements de position entre une trame réelle et une trame immédiatement précédente, et
ladite position décalée étant calculée en transformant ladite position déterminée, telle que déterminée par ledit expert, par une matrice de transformation qui correspond à tous les changements survenus entre une trame de départ avec un indice de trame de départ et une trame réelle avec un indice de trame réelle.

7. Appareil selon la revendication 6,
comprenant un moyen de compression vidéo pour réduire la bande passante de diffusion en flux continu desdites données.

8. Appareil selon la revendication 9, un appareil photo portable étant fourni connecté audit ordinateur équipé d'une source de lumière pour éclairer les cibles voulues, en particulier un capteur RFID étant monté sur ledit appareil photo pour permettre la détection de code de pièces et des informations associées.

9. Appareil selon la revendication 9, des noeuds informatiques à distance automatisés supplémentaires étant fournis pour créer des flux vidéo supplémentaires, en particulier des caméras fixes auxiliaires qui sont positionnées par les techniciens et qui peuvent être commandées par les experts à distance pour effectuer un panoramique, un zoom et des mouvements d'inclinaison.

10. Appareil selon la revendication 9, un moyen de réalité augmentée étant fourni pour chevaucher des marqueurs visuels spéciaux sur les objets tombant à l'intérieur du champ de vision de l'opérateur.

11. Appareil selon la revendication 9, ladite diffusion en flux continu de vidéo étant associée à la technologie VoiceOverIP.

12. Appareil selon la revendication 7, un moyen de compression vidéo étant disposé de sorte que les flux vidéo et les flux audio sont compressés et combinés, de préférence 384 Kbit/s en liaison ascendante et 384 Kbits/s en liaison descendante, plus précisément ledit moyen de compression vidéo comprenant la technologie de compression H.264.
